# EUROPÄISCHE PATENTSCHRIFT

(11) **EP 1 604 892 B1**
(45) Veröffentlichungstag und Bekanntmachung des Hinweises auf die Patenterteilung: **17.12.2008**
(21) Anmeldenummer: 05010928.9
(22) Anmeldetag: 20.05.2005
(51) Int. Cl.: B62J 9/00

(54) **Seitenkoffer für Motorräder**
Side case for motorcycle
Valise latérale pour motocyclette

(30) Priorität: 09.06.2004 DE 102004028074
(43) Veröffentlichungstag der Anmeldung: 14.12.2005
(73) Patentinhaber: Bayerische Motoren Werke Aktiengesellschaft, 80809 München (DE)
(72) Erfinder: Reinhart, Peter, 82380 Peissenberg (DE); Von Hagen, Martin, 58648 Iserlohn (DE)

(56) Entgegenhaltungen:
- DE-A1- 3 924 450
- DE-A1- 10 150 055
- DE-A1- 19 511 013
- US-B1- 6 389 645

## Beschreibung

Die vorliegende Erfindung betrifft einen Seitenkoffer für Motorräder gemäß dem Oberbegriff des Patentanspruches 1.

Viele Motorräder sind mit Seitenkoffern ausgestattet. Bei herkömmlichen Seitenkoffern ist an der Oberseite des Seitenkoffers ein U-förmiger Tragegriff angeordnet. Der Tragegriff weist einen sich in Längsrichtung des Seitenkoffers erstreckenden Griffabschnitt und zwei von Enden des Griffabschnitts abstehende Verbindungsabschnitte auf, über die der Tragegriff schwenkbar mit dem Seitenkoffer verbunden ist. Die Tragegriffe herkömmlicher Seitenkoffer sind üblicherweise zwischen zwei Stellungen hin- und herschwenkbar. In einer ersten Schwenkstellung ist der Tragegriff im wesentlichen parallel zur Kofferoberseite. Dies ist die Gebrauchsstellung, wenn der Seitenkoffer am Motorrad befestigt ist. In einer zweiten Stellung ist der Tragegriff nach oben geklappt und steht mit seinen Verbindungsabschnitten von der Oberseite des Seitenkoffers ab.

Bei vielen Motorrädern ist im Bereich oberhalb des Tragegriffs des Seitenkoffers ein Soziushaltegriff angeordnet. Beim Abnehmen des Seitenkoffers vom Motorrad wird der Tragegriff nach oben geklappt. Dabei muss ein gewisser Mindestabstand zwischen dem Tragegriff und dem Soziushaltegriff vorgesehen sein, um zu verhindern, dass beim nach oben Klappen des Tragegriffs die Finger des Motorradfahrers zwischen den Tragegriff und den Soziushaltegriff eingeklemmt werden. Dadurch ist man hinsichtlich der Anordnung des Tragegriffs erheblich eingeschränkt.

Dokument DE 10 150 055 A zeigt einen Seitenkoffer für Motorräder gemäß dem Stand der Technik.

Aufgabe der Erfindung ist es, einen Motorradseitenkoffer zu schaffen, bei dem der Tragegriff in ergonomisch günstiger Weise mit dem Seitenkoffer verbunden ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Seitenkoffer für Motorräder aus, der eine Kofferinnenseite, die im montierten Zustand dem Motorrad zugewandt ist, eine dem Motorrad abgewandte Kofferaußenseite und eine Oberseite aufweist, an der ein Tragegriff angeordnet ist. Der Tragegriff weist einen sich in Längsrichtung des Seitenkoffers streckenden Griffabschnitt und zwei von den Enden des Griffabschnitts abstehende Verbindungsabschnitte auf. Über die Verbindungsabschnitte ist der Tragegriff schwenkbar mit dem Seitenkoffer gekoppelt. Der Tragegriff ist zwischen einer ersten Stellung, in der die Verbindungsabschnitte im wesentlichen parallel zur Oberseite des Seitenkoffers sind, und einer zweiten Stellung, in welcher der Tragegriff mit dem Verbindungsabschnitten nach oben von der Oberseite des Seitenkoffers absteht, hin- und her schwenkbar.

Der Kern der Erfindung besteht darin, dass die Verbindungsabschnitte des Tragegriffs jeweils über einen Viergelenkmechanismus mit dem Seitenkoffer verbunden sind. Die Verbindungsabschnitte des Tragegriffs sind also nicht, wie dies bei den meisten herkömmlichen Seitenkoffern der Fall ist, jeweils unmittelbar über ein Gelenk mit dem Seitenkoffer verbunden, sondern jeweils über ein Schwenkarmpaar. Somit wird der Tragegriff beim nach oben Klappen nicht um eine raumfeste Schwenkachse geschwenkt, sondern um eine Schwenkachse, die in Abhängigkeit von der Geometrie der Viergelenkmechanismen beim Verschwenken entlang einer Momentanpolbahn wandert.

Vorzugsweise ist der Tragegriff U-förmig ausgebildet. Der Tragegriff kann so mit dem Seitenkoffer verbunden sein, dass in der ersten Stellung des Tragegriffs der Griffabschnitt in Bezug auf die Verbindungsabschnitte der Kofferaußenseite zugewandt bzw. der Kofferinnenseite abgewandt ist. Mit einer derartigen Anordnung des Tragegriffs kann beim nach oben Klappen des Tragegriffs ein relativ großer Abstand zwischen dem Griffabschnitt des Tragegriffs und der Motorradseitenverkleidung bzw. einem seitlich am Motorrad angeordneten Soziussitzgriff eingehalten und ein Einklemmen der Hand bzw. einzelner Finger vermieden werden.

Wie bereits erwähnt, ist jedem der Verbindungsabschnitte ein Viergelenkmechanismen zugeordnet. Jeder der Viergelenkmechanismen weist einen ersten und einen zweiten Schwenkarm auf. Erste Enden der Schwenkarme sind über Gelenke mit dem jeweiligen Verbindungsabschnitt verbunden. Zweite Enden der Schwenkarme sind über Gelenke mit dem Seitenkoffer verbunden. Die ersten Schwenkarme können die Form einer länglichen Platte haben. Die zweiten Schwenkarme haben in einer Draufsicht gesehen die Form eines Winkels, wobei die Schenkel des zweiten Schwenkarms in einem rechten Winkel zueinander stehen können. Durch die konkrete Abstimmung der Form, Länge und Anordnung der Schwenkarme in Bezug auf den Seitenkoffer ist die Bewegungsbahn des Tragegriffs beim hin- und herverschwenken eindeutig festgelegt. Durch geeignete Abstimmung der Länge, Form und Anordnung der Schwenkarme kann eine ergonomisch günstige Bewegungsbahn für den Tragegriff erreicht werden.

Der Tragegriff kann mit einer Verriegelung gekoppelt sein, die zur Verriegelung des Seitenkoffers am Motorrad vorgesehen ist. Der Tragegriff fungiert dabei als Betätigungselement für die Verriegelung. Dabei kann vorgesehen sein, dass sich die Verriegelung in einer verriegelten Position befindet, wenn der Tragegriff in der ersten Stellung ist und in einer entriegelten Position, wenn der Tragegriff nach oben geklappt, d. h. in einer zweiten Stellung ist.

Im folgenden wir die Erfindung im Zusammenhang mit der Zeichnung näher erläutert. Es zeigen:
- Figur 1: einen Seitenkoffer mit schwenkbarem Tragegriff gemäß dem Stand der Technik; und
- Figur 2: einen Seitenkoffer mit einem schwenkbaren Tragegriff gemäß der Erfindung in einer Verriegelungs- bzw. Gebrauchsstellung;
- Figur 3: den Seitenkoffer der Figur 2, wobei sich der Tragegriff in einer Zwischenstellung befindet; und
- Figur 4: den Seitenkoffer der Figur 2, wobei sich der Tragegriff in einer Entriegelungsstellung befindet.

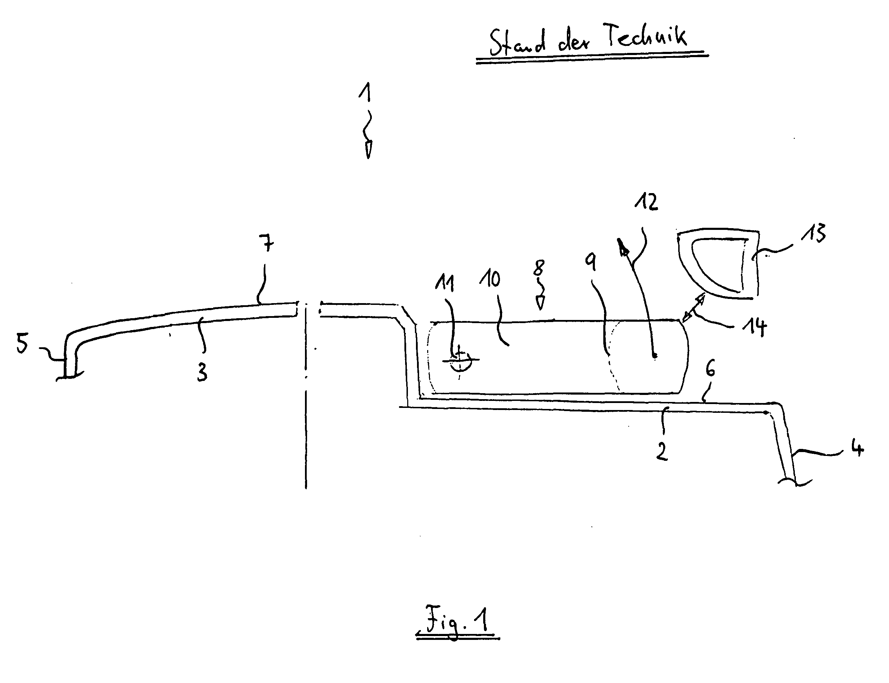

Figur 1 zeigt einen Seitenkoffer 1, der ein Kofferinnenteil 2 und ein Kofferaußenteil 3 aufweist. Das Kofferinnenteil 2 weist eine im montierten Zustand einem Motorrad (nicht dargestellt) zugewandte Kofferinnenseite 4 auf. Dementsprechend weist das Kofferaußenteil eine dem Motorrad (nicht dargestellt) abgewandte Kofferaußenseite auf. Oberseiten 6, 7 des Kofferinnenteils 2 und das Kofferaußenteils 3 bilden die Oberseite des Seitenkoffers 1. Im Bereich der Oberseite 6 des Kofferinnenteils 2 ist ein U-förmiger Tragegriff 8 angeordnet, der einen in der hier gezeigten Darstellung nur gestrichelt dargestellten Griffabschnitt 9 aufweist, der sich in Längsrichtung des Seitenkoffers, d. h. im wesentlichen senkrecht zur Zeichenebene erstreckt und zwei an den Enden des Griffabschnitts 9 vorgesehene Schenkel- bzw. Verbindungsabschnitt 10 aufweist. Enden der Verbindungsabschnitt 10 sind jeweils über ein Schwenkgelenk 11 mit dem Kofferinnenteil 2 verbunden. Der Tragegriff 8 kann also wie durch den Pfeil 12 angedeutet ist, nach oben verschwenkt werden.

Bei vielen Motorrädern ist auf beiden Seiten seitlich am Motorrad jeweils ein sich in Längsrichtung des Motorrads erstreckender Soziushaltegriff vorgesehen. Bei der in Figur 1 gezeigten Darstellung ist ein derartiger Soziushaltegriff 13 dargestellt. Wie durch den Pfeil 14 angedeutet ist, kann sich je nach Dimensionierung des Seitenkoffers 1, des Tragegriffs 8 und der Anordnung des Soziushaltegriffs 13 ein relativ geringer Abstand zwischen dem Griffabschnitt 9 und dem Soziushaltegriff 13 ergeben, so dass nicht ausgeschlossen, dass man sich beim nach oben Klappen des Tragegriffs die Finger zwischen dem Tragegriff 8 und dem Soziushaltegriff 13 einklemmt.

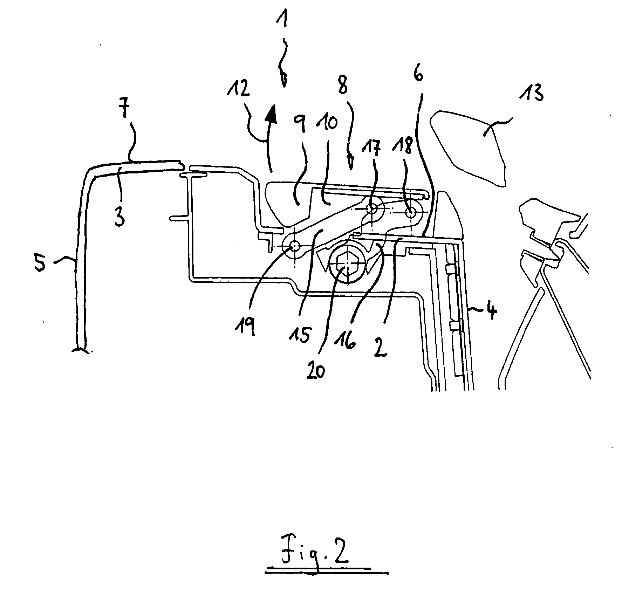

Figur 2 zeigt ein Ausführungsbeispiel eines Seitenkoffers gemäß der Erfindung. Sofern identische Bezugszeichen wie in Figur 1 erwähnt werden, bezeichnen diese identische Bauteile. Ein wesentlicher Unterschied zu dem in Figur 1 gezeigten Seitenkoffer besteht darin, dass der Tragegriff 8 an jedem der beiden Verbindungsabschnitte, von denen in der hier gezeigten Darstellung lediglich der Verbindungsabschnitt 10 zu sehen ist, über einen Viergelenkmechanismus mit dem Seitenkoffer 1 schwenkbar verbunden ist. Jeder der vier Gelenkmechanismen weist einen ersten Schwenkarm 15 und einen zweiten Schwenkarm 16 auf. Erste Enden der Schwenkarme 15, 16 sind über erste Gelenke 17, 18 mit dem zugeordneten Verbindungsabschnitt 10 des Tragegriffs 8 verbunden. Zweite Enden der Schwenkarme 15, 16 sind über Gelenke 19, 20 mit dem Seitenkoffer verbunden. Ein weiterer Unterschied gegenüber dem in Figur 1 gezeigten Stand der Technik besteht darin, dass der Griffabschnitt 9 in Bezug auf die Verbindungsabschnitte 10 des Tragegriffs 8 der Kofferaußenseite 5 zugewandt bzw. der Kofferinnenseite 4 abgewandt ist. Bei nach oben Klappen des Tragegriffs 8 bewegt dieser somit relativ weit entfernt von dem Soziushaltegriff 13, so dass die Gefahr eines Einklemmens zwischen dem Griffstück 9 des Tragegriffs 8 und dem Soziushaltegriff 13 vermieden wird.

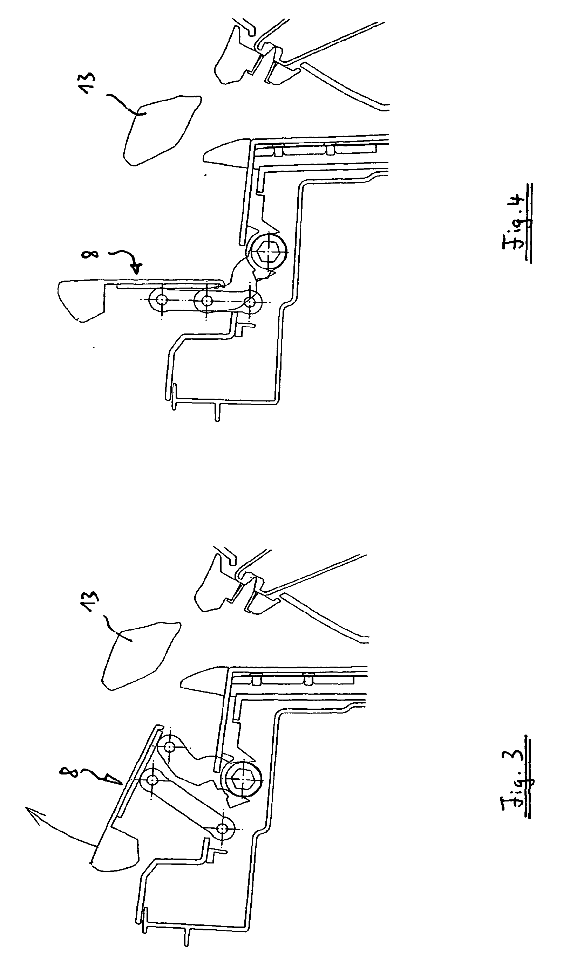

Figur 3 zeigt den Tragegriff 8 in einer Zwischenstellung, Figur 4 in eine senkrecht nach oben verschenkten Endstellung.

## Patentansprüche

1. Seitenkoffer (1) für ein Motorrad, mit einer Kofferinnenseite (4), die im montierten Zustand dem Motorrad zugewandt ist, einer dem Motorrad abgewandten Kofferaußenseite (5) und einem an einer Oberseite (6) des Seitenkoffers (1) angeordneten Tragegriff, wobei
- der Tragegriff (8) einen sich in einer Längsrichtung des Seitenkoffers (1) erstreckenden Griffabschnitt (9) und zwei von Enden des Griffabschnitts (9) abstehende Verbindungsabschnitte (10) aufweist, über die der Tragegriff (8) schwenkbar mit dem Seitenkoffer (1) verbunden ist und wobei
- der Tragegriff (8) zwischen einer ersten Stellung, in welcher die Verbindungsabschnitte (10) im wesentlichen parallel zur Oberseite (6) des Seitenkoffers (1) sind, und einer zweiten Stellung, in welcher der Tragegriff (8) mit den Verbindungsabschnitten (10) nach oben von der Oberseite (6) des Seitenkoffers (1) absteht, hin- und her schwenkbar ist,
**dadurch gekennzeichnet, dass**
die Verbindungsabschnitte (10) jeweils über einen Viergelenkmechanismus (15 - 20) mit der Oberseite (6) des Seitenkoffers (1) verbunden sind.

2. Seitenkoffer (1) nach Anspruch 1, wobei in der ersten Stellung des Tragegriffs (8) der Griffabschnitt (9) in Bezug auf die Verbindungsabschnitte (10) der Kofferaußenseite (5) zugewandt und der Kofferinnenseite (4) abgewandt ist.

3. Seitenkoffer (1) nach einem der vorangegangen Ansprüche, wobei jeder der Viergelenkmechanismen (15 - 20) einen ersten und einen zweiten Schwenkarm (15, 16) aufweist, wobei erste Enden der Schwenkarme über Gelenke (17, 18) mit einem zugeordneten Verbindungsabschnitt (10) des Tragegriffs (8) und zweite Enden der Schwenkarme (15, 16) über Gelenke (19, 20) mit dem Seitenkoffer (1) verbunden sind.

4. Seitenkoffer (1) nach Anspruch 3, wobei die ersten Schwenkarme (15) die Form einer länglichen Platte haben.

5. Seitenkoffer (1) nach Anspruch 3 oder 4, wobei die zweiten Schwenkarme (16) in einer Draufsicht die Form eines Winkels haben.

6. Seitenkoffer (1) nach einem der Ansprüche 3 bis 5, wobei die zweiten Schwenkarme (16) in einer Draufsicht L-förmig sind.

7. Seitenkoffer (1) nach einem der Ansprüche 1 bis 6, wobei der Tragegriff (8) mit einem außen am Seitenkoffer (1) angeordneten Verriegelungsmechanismus gekoppelt ist, der zur Verriegelung des Seitenkoffers (1) am Motorrad vorgesehen ist, wobei der Tragegriff (8) in Bezug auf den Verriegelungsmechanismus als Betätigungselement fungiert und der Verriegelungsmechanismus in einer verriegelten Position ist, wenn sich der Tragegriff in der ersten Stellung befindet und der Verriegelungs-mechanismus in einer entriegelten Position ist, wenn sich der Tragegriff (8) in der zweiten Stellung befindet.

8. Motorrad mit einem im Hinterradbereich des Motorrads angeordneten Seitenkoffer gemäß den Merkmalen eines der Ansprüche 1 bis 7, wobei seitlich am Motorrad, in einem Bereich oberhalb des Tragegriffs (8) ein sich in Längsrichtung des Motorrads erstreckender Soziushaltegriff (13) angeordnet ist.

## Claims

1. A side trunk (1) for a motorcycle, comprising an inner side (4) which when installed faces the motorcycle, an outer side (5) remote from the motorcycle and a handle disposed on a top (6) of the side trunk (1), wherein
- the handle (8) has a handle portion (9) extending in a longitudinal direction of the side trunk (1) and two connecting portions (10) projecting from ends of the handle portion (9) and pivotably connecting the handle (8) to the side trunk (1), and wherein
- the handle (8) is movable in reciprocation between a first position in which the connecting portions (10) are substantially parallel with the top (6) of the side trunk (1) and a second position in which the handle (8) and the connecting portions (10) project upwards from the top (6) of the side trunk (1),
**characterised in that**
the connecting portions (10) are each connected to the top (6) of the trunk (1) by a four-bar mechanism (15-20).

2. A side trunk (1) according to claim 1 wherein when the handle (8) is in the first position, the handle portion (9) relative to the connecting portions (10) faces the outside (5) of the trunk and away from the inner side (4).

3. A side trunk (1) according to any of the preceding claims, wherein each four-bar mechanism (15-20) has a first and a second swivel arm (15, 16), wherein first ends of the swivel arms are connected by joints (17, 18) to an associated connecting portion (10) of the handle (8) and second ends of the swivel arms (15, 16) are connected by joints (19, 20) to the side trunk (1).

4. A side trunk (1) according to claim 3, wherein the first swivel arms (15) are in the shape of an oblong plate.

5. A side trunk (1) according to claim 3 or claim 4, wherein the second swivel arms (16) have an angular shape in plan view.

6. A side trunk (1) according to any of claims 3 to 5, wherein the second swivel arms (16) are L-shaped in plan view.

7. A side trunk (1) according to any of claims 1 to 5, wherein the handle (8) is connected to a locking mechanism disposed on the outside of the trunk (1) and provided for locking the side trunk (1) to the motorcycle, wherein the handle (8) serves as an actuating element for the locking mechanism, and the locking mechanism is in a locked position when the handle (8) is in the first position and the locking mechanism is in an unlocked position when the handle is in the second position.

8. A motorcycle comprising a side trunk in the rear region of the motorcycle according to the features in any of claims 1 to 7, wherein a handle (13) for a pillion, extending in the longitudinal direction of the motorcycle, is provided on the side of the motorcycle in a region above the handle (8).

## Revendications

1. Mallette latérale (1) pour une moto comportant un côté intérieur de mallette (4) tourné vers la roue de la moto à l'état installé, un côté extérieur de mallette (5) à l'opposé de la roue de moto et une poignée sur le côté supérieur (6) de la mallette latérale (1),
- la poignée (8) comportant un segment de préhension (9) s'étendant dans la direction longitudinale du coffre latéral (1) et deux segments de liaison (10) dépassant des extrémités du segment de poignée (9), par lesquelles la poignée (8) est reliée de manière pivotante à la mallette latérale (1), et
- la poignée (8) peut basculer dans un sens et dans l'autre entre une première position dans laquelle les segments de liaison (10) sont pratiquement parallèles au côté supérieur (6) de la mallette latérale (1) et une seconde position dans laquelle la poignée de support (8) dépasse du côté supérieur (6) de la mallette latérale (1), les segments de liaison (10) étant tournés vers le haut,
**caractérisée en ce que**
les segments de liaison (10) sont reliés au côté supérieur de la mallette latérale (1) chacun par un mécanisme à quadrangle articulé (15-20).

2. Mallette latérale (1) selon la revendication 1,
selon laquelle
dans la première position de la poignée (8), le segment de préhension (9) est tourné vers le côté extérieur (5) de la mallette par rapport au segment de liaison (10) et opposé au côté intérieur (4) de la mallette.

3. Mallette latérale (1) selon les revendications précédentes,
selon laquelle
chaque mécanisme à quadrangle articulé (15-20) comprend un premier et un second bras pivotant (15, 16), la première extrémité des bras pivotants étant reliée par des articulations (17, 18) à un segment de liaison associé (10) de la poignée (8), et la seconde extrémité des bras pivotants (15, 16) est reliée par des articulations (19, 20) à la mallette latérale (1).

4. Mallette latérale (1) selon la revendication 3,
selon laquelle
les premiers bras pivotants (15) ont la forme d'une plaque allongée.

5. Mallette latérale (1) selon la revendication 3 ou 4,
selon laquelle
les seconds bras pivotants (16) ont en vue de dessus une forme de cornière.

6. Mallette latérale (1) selon les revendications 3 à 5,
selon laquelle
les seconds bras pivotants (16) ont en vue de dessus une forme de L.

7. Mallette latérale (1) selon les revendications 1 à 6
selon laquelle
la poignée (8) est couplée à un mécanisme de verrouillage installé à l'extérieur de la mallette latérale (1), pour verrouiller la mallette latérale (1) sur la moto,
la poignée (8) fonctionnant par rapport au mécanisme de verrouillage comme élément d'actionnement et le mécanisme de verrouillage est en position verrouillée si la poignée de support se trouve dans une première position et le mécanisme de verrouillage est dans une position déverrouillée si la poignée (8) se trouve dans une seconde position.

8. Moto comportant une mallette latérale installée dans la région de la roue arrière de la moto selon les caractéristiques des revendications 1 à 7;
selon laquelle
latéralement sur la moto, dans une zone située au-dessus de la poignée (8), il est prévu une poignée pour passager (13) s'étendant dans la direction longitudinale de la moto.
